# EUROPEAN PATENT APPLICATION

(11) **EP 2 661 073 A2**
(43) Date of publication of application: **06.11.2013**
(21) Application number: 13166283.5
(22) Date of filing: 02.05.2013
(51) Int. Cl.: H04N 5/232, B60R 11/04

(54) **System and method of interactively controlling a virtual camera**

(30) Priority: 03.05.2012 US 201213462826
(71) Applicant: HARMAN INTERNATIONAL INDUSTRIES, INCORPORATED, Northridge California 91329 (US); Harman International (Shanghai) Management Co., Ltd., 200004 Shanghai (CN)
(72) Inventor: Zhou, Weifeng, 200123 Shanghai (CN); Weyrich, Norman, 201206 Shanghai (CN); He, Jia, 201100 Shanghai (CN)
(74) Representative: Patentanwälte Westphal, Mussgnug & Partner

(57) **Abstract**

A multiple-view virtual camera system comprising one or more image source units, an image processing unit, a parameter setting unit in signal communication with the image processing unit, and a display in signal communication with the image processing unit. The display is configured to display images generated by the image processing unit to a user of the virtual camera system, where the displayed images are configured according to image-related parameters input by a user of the multiple-view camera system through the parameter setting unit. The parameter setting unit may include a user interface, such as a single-touch or multi-touch touchscreen display, configured to accept input from the user that adjusts the parameters that are transmitted to the image processing unit and utilized by the image processing unit. A method of interactively controlling the virtual camera system by a user of a motor vehicle is also disclosed.

## Description

### BACKGROUND

### 1. Field of the Invention

The present invention relates generally to multiple-view camera systems, and more particularly, to a system and method of interactively controlling the images that are generated by a virtual camera of the multiple-view camera system for display to a user.

### 2. Related Art

Recently, there has been an increasing usage of cameras in motor vehicles. Initially, rearview monitors were added to motor vehicles to improve the rearward visibility for the driver of the vehicle for safety reasons. Subsequently, multiple cameras or monitors were placed at various positions on the motor vehicle in order to provide the user with a better view of all of the areas surrounding his vehicle.

In a bird's-eye or overhead camera system, typically there are four cameras used, mounted in the front and rear and on the left and right sides of the motor vehicle. Images taken from these four cameras are sent to an image processing unit that combines the images to form a bird's eye or overhead view showing the entire view surrounding the motor vehicle. In general, the processing of the multiple images requires taking the images, which may be overlapping to some extent, and combining and projecting them on a flat surface for display on a monitor or display in the motor vehicle. Because these images are projected on a flat surface, the shape of objects further away from the motor vehicle may be blurred or distorted, and therefore, all of the surroundings of the motor vehicle may not be adequately displayed to the driver of the motor vehicle.

If the point-of-view of the camera system is fixed above the motor vehicle for the bird's eye or overhead view, the image made available to the driver of the motor vehicle may extend only to a relatively small area extending around the vehicle. Thus, this type of camera system may not be capable of adequately showing all of the motor vehicle's surroundings to the driver. One solution to this problem is to allow the driver to adjust or change the point-of-view of the camera system to give the driver a different view that will better serve his needs.

Another solution is to display multiple images from the multiple cameras and allow the driver to select those images that will give him a better view to meet his needs when maneuvering the motor vehicle, such as when parking, turning, or merging onto a freeway. This solution, however, is limited to only those images that are available from the multiple camera sources, and thus the driver's viewing options are limited by the images available from each of the multiple input sources.

Accordingly, a need exists for a multiple-view camera system that processes and combines multiple images with a virtual camera that can be interactively controlled and adjusted by the driver of the motor vehicle so that he is able to select and/or adjust multiple camera-related parameters related to the displayed images in order to obtain the desired view of his surroundings.

### SUMMARY

In view of the above, a multiple-view camera system is provided that comprises at least one image source unit, an image processing unit in signal communication with each of the one or more image source units, a parameter setting unit in signal communication with the image processing unit and configured to transmit to the image processing unit parameters related to images generated by the image processing unit, and a display in signal communication with the image processing unit and configured to display the images generated by the image processing unit to a user of the multiple-view camera system, where the displayed images are configured according to the image-related parameters. The image-related parameters transmitted to the image processing unit include translation of a virtual camera along its three axes, rotation around these three axes, and also changes to the focal length of a lens of the virtual camera.

The parameter setting unit may further include a user interface, such as a single-touch or multi-touch touchscreen display, configured to accept input from the user that adjusts the parameters that are transmitted to the image processing unit. A method of interactively controlling a virtual camera of the multiple-view camera system by a user of a motor vehicle is also disclosed. It is to be understood that the features mentioned above and those yet to be explained below may be used not only in the respective combinations indicated herein but also in other combinations or in isolation without departing from the scope of the invention.

Other devices, apparatus, systems, methods, features and advantages of the invention will be or will become apparent to one with skill in the art upon examination of the following figures and detailed description. It is intended that all such additional systems, methods, features and advantages be included within this description, be within the scope of the invention, and be protected by the accompanying claims.

### BRIEF DESCRIPTION OF THE DRAWINGS

The description below may be better understood by reference to the following figures. The components in the figures are not necessarily to scale, emphasis instead being placed upon illustrating the principles of the invention. In the figures, like reference numerals designate corresponding parts throughout the different views.

FIGURE 1 is a block diagram of an example of a multiple-view camera system in accordance with one example implementation of the invention.

FIGURE 2 is a simplified block diagram of one example of an implementation of an image processing unit of the multiple-view camera system of FIG. 1 that is coupled to the display unit and the parameter setting unit of FIG. 1 together with a graphical user interface.

FIGURE 3 is schematic diagram of an example coordinate system applied to a virtual camera of the multiple-view camera system illustrating the image-related parameters that define a surround-view image for display on a display unit in the motor vehicle.

FIGURE 4 is schematic diagram of an example coordinate system applied to a virtual camera of the multiple-view camera system illustrating the image-related parameters that define a directional-view image for display on a display unit in the motor vehicle.

FIGURE 5 is schematic diagram of an example coordinate system applied to a virtual camera of the multiple-view camera system of FIG. 1 illustrating the image-related parameters that define a directional-view image for display on a display unit in the motor vehicle.

FIGURE 6A is a schematic diagram of an example coordinate system applied to a virtual camera of FIG. 5 together with a schematic diagram of a display showing a driver's gesture for a single-touch horizontal gesture.

FIGURE 6B is a schematic diagram of the example coordinate system of FIG. 6A together with a schematic diagram of a display showing a driver's gesture for a single-touch vertical gesture.

FIGURE 6C is a schematic diagram of the example coordinate system of FIG. 6A together with a schematic diagram of a display showing a driver's gesture for a double-touch spin gesture.

FIGURE 6D is a schematic diagram of the example coordinate system of FIG. 6A together with a schematic diagram of a display showing a driver's gesture for a single-touch horizontal gesture.

FIGURE 6E is a schematic diagram of the example coordinate system of FIG. 6A together with a schematic diagram of a display showing a driver's gesture for a double-touch vertical gesture.

FIGURE 6F is a schematic diagram of the example coordinate system of FIG. 6A together with a schematic diagram of a display showing a driver's gesture for a double-touch pinch gesture.

FIGURE 7A is a schematic diagram of a motor vehicle that includes a multiple-view camera system in accordance with the invention.

FIGURE 7B is another schematic diagram of a motor vehicle that includes a multiple view camera system in accordance with the invention.

FIGURE 8A is a schematic diagram of a display of the multiple-view camera system in accordance with the invention showing a schematic sketch that may be displayed to a user of the virtual camera system.

FIGURE 8B is a schematic diagram of the display of FIG. 8A with the sketch displayed to the user as modified after inputting an image-related parameter.

FIGURE 9 is a flow diagram illustrating operation of an example of a method of interactively controlling a virtual camera in a multiple-view camera system in a motor vehicle.

### DETAILED DESCRIPTION

It is to be understood that the following description of various examples is given only for the purpose of illustration and is not to be taken in a limiting sense. The partitioning of examples in the function blocks, modules or units shown in the drawings is not be construed as indicating that these function blocks, modules or units are necessarily implemented as physically separate units. Functional blocks, modules or units shown or described may be implemented as separate units, circuits, chips, functions, modules, or circuit elements. One or more functional blocks or units may also be implemented in a common circuit, chip, circuit element or unit.

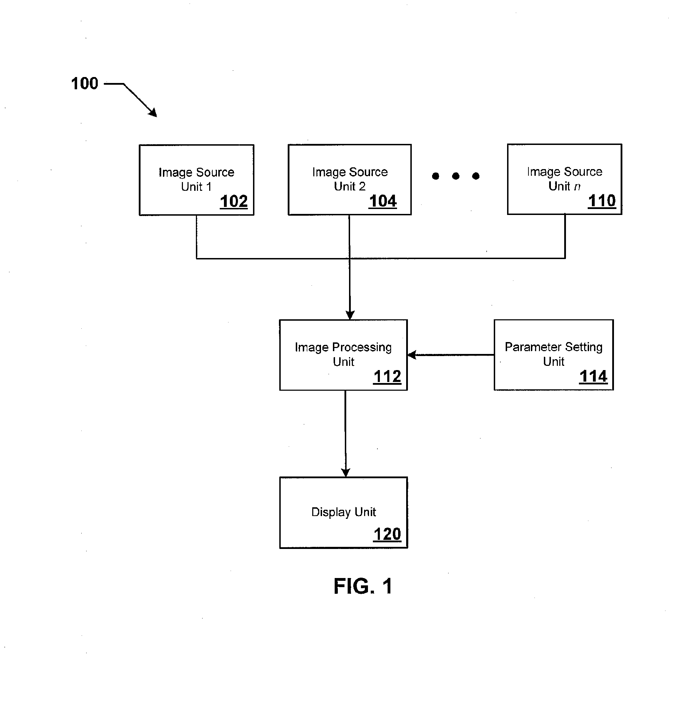

The example implementation of a multiple-view camera system 100 illustrated in FIG. 1 includes n Image Source Units 102, 104, ... 110, each of which are in signal communication with Image Processing Unit 112. Image Source Units 102, 104, ... 110 may include four vehicle-mounted cameras, with one positioned at the front of the motor vehicle, a second at the rear of the motor vehicle, and one each on the left and the rear sides of the motor vehicle. In this implementation, the Image Source Units are all video cameras; however, the Image Source Units may also include sensor devices that measure distances to physical objects near the motor vehicle, graphic- and text-generating devices that generate navigation data for the driver, and other like devices that collect data that may be useful to the driver, and therefore it is not necessary that all Image Source Units be video cameras or of the same type.

The Image Source Units 102, 104, ... 110 are configured to capture multiple video images of the areas immediately surrounding the motor vehicle, which are then transmitted to Image Processing Unit 112. Image Processing Unit 112 receives the video image data that may include data for a 3D or 2D image and processes this data to generate an image that will be displayed to a driver of the motor vehicle using the Display Unit 120. The Parameter Setting Unit 114 provides image-related parameters to the Image Processing Unit 112 that are used to generate a proper view of the immediately surrounding areas of the motor vehicle, that is, that view that is desired by the driver to meet his driving needs. Such image-related parameters may be adjusted in the Parameter Setting Unit 114 and include but are not limited to the virtual camera's position, the type of view presented (e.g., surround or directional), the direction of the view, the field of view, the degree of rotation around the axes defining the viewing position, and the focal length of the camera lens of the virtual camera.

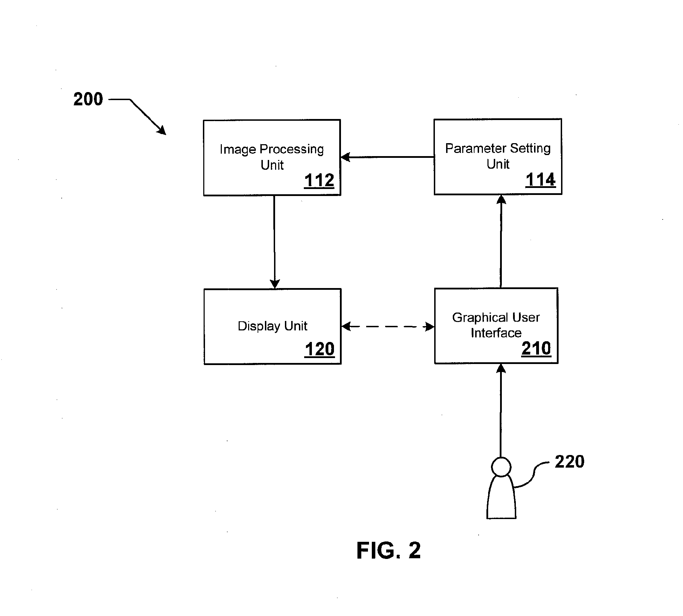

FIG. 2 is a simplified block diagram 200 of one example of an implementation of the Parameter Setting Unit 114 in signal communication with the Image Processing Unit 112 of FIG. 1. The Parameter Setting Unit 114 may include a Graphical User Interface 210 configured to be used by a driver 220 of a motor vehicle. The Graphical User Interface 210 may be a touchscreen or touchpad operable by the driver 220 to select and adjust an image-related parameter. In FIG. 2, the Graphical User Interface 210 is shown as a separate block from the Display Unit 120; however, in another implementation, the Graphical User Interface 210 and the Display Unit 120 may be a single element with, for example, the Graphical User Interface 210 comprising an overlay that outlines the motor vehicle placed over the Display Unit 120, thus allowing the driver 220 to adjust the viewing position of the multiple-view virtual camera system of FIG. 1, using, for example, a touchscreen. In other implementations, the Graphical User Interface 210 may be a separate input device that may be operated by the driver 220 or even a passenger in the motor vehicle. In addition to a touchscreen or touchpad, these input devices may also include joysticks, thumbsticks, keyboards, and numeric keypads.

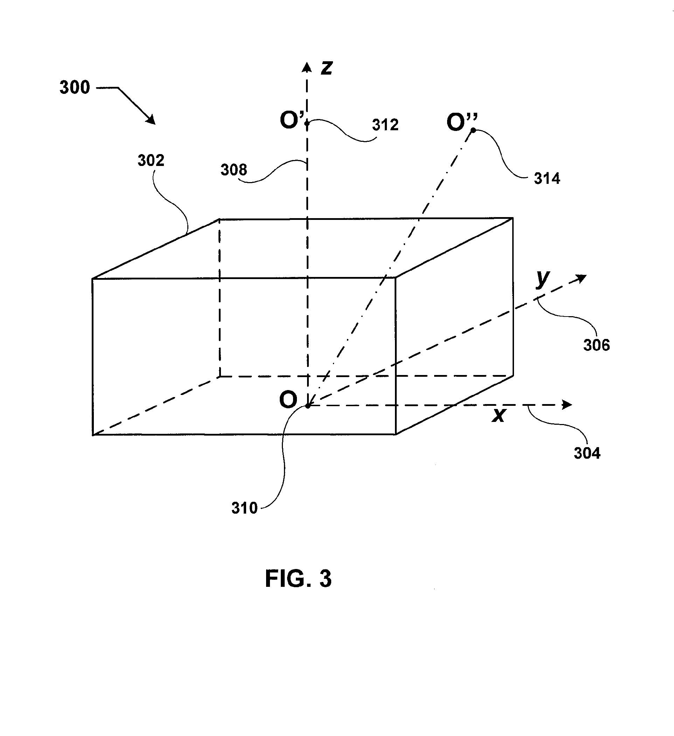

In general, the multiple-view camera system of FIG. 1 comprises a "virtual" camera available to the driver of a motor vehicle configured to generate whatever image he desires to display in his motor vehicle, that is, a camera that may be repositioned relative to the motor vehicle by image-related parameters input by the user into the multiple-view camera system by means of a graphical user interface. One such image may be a 360° field-of-view image that renders a bird's-eye or wraparound view of the surroundings of the motor vehicle (herein referred to as a "surround-view image"). FIG. 3 is a schematic diagram that illustrates a coordinate system that may be used to define the image-related parameters of a multiple-view camera system configured to generate an adjustable surround-view image for a driver of a motor vehicle. In FIG. 3, block 302 represents a motor vehicle, and the motor vehicle and its immediate surroundings may be defined by a three-dimensional world coordinate system 300 consisting of three axes: an *x*-axis 304, a *y*-axis 306, and a *z*-axis 308. A point of origin O 310, with the coordinates of (0, 0, 0), can be arbitrarily fixed within the vehicle, for example, at its center of gravity, and the multiple-view camera system may be set to point of origin O 310 initially or by default. The *x*-axis 304 points in the driving direction of the motor vehicle when moving forward.

When a driver of the motor vehicle wishes to adjust the viewing position of the virtual camera, he may do so by inputting the appropriate adjusted image-related parameters into the Parameter Setting Unit 114 through the Graphical User Interface 210, FIG. 2. In one implementation, the Graphical User Interface 122 may comprise a touchscreen that is overlaid onto the Display Unit 120, where the overlay shows the three-dimensional world coordinate system 300.

The touchscreen may be either a single-touch or a multi-touch input device, and methods of adjusting the image-related parameters may include the Image Processing Unit 112 detecting a gesture across the input device, determining a direction and distance of the gesture, and performing predetermined parameter adjustment(s) determined by the direction and distance of the gesture. For the single-touch input device, a gesture may include a touchdown on the touchscreen, followed by motion along the surface of the touchscreen. When the single finger moves on the touchscreen and the distance of the motion exceeds a predetermined threshold Tₛ0, the driver's input is interpreted as a gesture.

Each particular gesture may be linked to a particular parameter adjustment. For example, the single-finger vertical gesture may be used to control the rotation of the virtual camera around the *y*-axis 306, the single-finger horizontal gesture may be used to control the rotation of the virtual camera around the *z*-axis 308, and the single-finger spin gesture may be used to control the rotation of the virtual camera around the *x*-axis 304.

For a multi-touch input device, the same gestures that are defined by a single finger input may also be input to the multi-touch input device. Additionally, multi-touch gestures may be defined for input into the input device using two or more fingers. In general, a multi-touch gesture may include a touchdown on a touchscreen with two or more fingers followed by motion along the touchscreen with these fingers. When the fingers move on the touchscreen and the distance of the motion exceeds a predetermined threshold Tₘ0, the input is interpreted as a gesture.

In one implementation, the type of multi-touch gesture intended may be determined by two elements: 1) the distance between the fingers when touchdown on the input device occurs; and 2) the ratio of the magnitude of the horizontal movement to the magnitude of a vertical movement of the finger or fingers that subsequently are in motion on the input device. If the distance between the fingers when touchdown occurs on a touchscreen does not exceed a predetermined threshold Tₘ1, then the input may be interpreted as a multi-finger gesture. If the ratio of the magnitude of the horizontal movement to the magnitude of a vertical movement is less than a predetermined threshold Tₘ2, then the input may be interpreted as a multi-finger vertical gesture, while if the ratio of the magnitude of the horizontal movement to the magnitude of a vertical movement is greater than a predetermined threshold Tₘ3, then the input may be interpreted as a multi-finger horizontal gesture. If the ratio of the magnitude of the horizontal movement to the magnitude of a vertical movement is greater than the threshold Tₘ2 and less than the threshold Tₘ3, then the input may be interpreted as a multi-finger pinch gesture.

Each particular multi-finger gesture may be linked to a particular parameter adjustment. For example, a double-finger vertical gesture may be used to control the translation of the virtual camera along the *z*-axis 308, a double-finger horizontal gesture may be used to control the translation of the virtual camera along the *y*-axis 306, and a double-finger diagonal gesture may be used to control the translation of the virtual camera along the *x*-axis 304.

If the distance between the fingers when touchdown occurs on the touchscreen exceeds the threshold Tₘ1, and the distance between the fingers then increases, the input may be interpreted as a multi-finger zoom-in gesture. On the other hand, if the distance between the fingers that touch upon the touchscreen decreases, it may be interpreted as multi-finger zoom-out gesture. In other words, by placing two fingers on the touchscreen, separated by a predetermined distance, the user may then cause the virtual camera to zoom in or zoom out by bringing the two fingers closer together or further separating them, respectively.

Returning to FIG. 3, the multiple-view camera system may initially be set to point of origin O 310. If the driver wishes to move this point of origin, for example, along the *z*-axis 308, he would use the double-finger vertical gesture explained above, which will result in a repositioning of the viewing position from O 310 to O' 312. For movement along the *x*-axis 304, the driver would use the double-finger pinch gesture explained above. If the driver were to input a double-finger horizontal gesture, this would result in the translation of the viewing position along the *y*-axis 306. To move the virtual camera system from O 310 to O" 314, which would generate a surround-view image that is focused more on the driver's side of the vehicle, this would require both a horizontal gesture to move the virtual camera along the *y*-axis 306, and a vertical gesture to move the virtual camera along the *z*-axis 308 to O" 314.

In other situations, the driver may wish a more focused view of his surroundings, such as, for example, when reversing or parking his motor vehicle. In these situations, the "virtual" camera of the multiple-view camera system may first be moved to any position relative to the motor vehicle, *e.g.*, on the driver's side of the motor vehicle, and once properly positioned, the driver may make the necessary adjustments to the "virtual" camera to obtain the desired view. These adjustments may include changing the point of view of the "virtual" camera, increasing or decreasing the field of view of the "virtual" camera, rotating the camera around any of the three axes, as well as changing the focal length of the lens of the "virtual" camera.

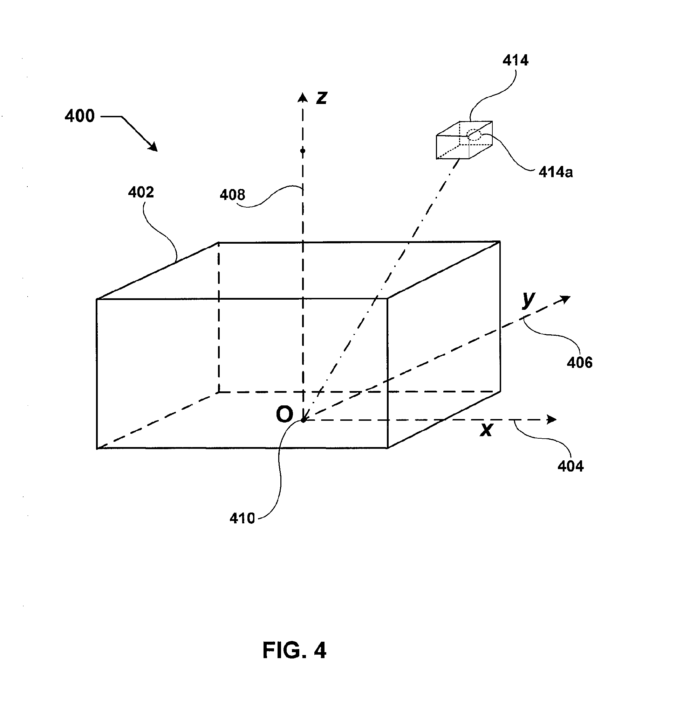

FIG. 4 is a schematic diagram that illustrates a coordinate system 400 that may be used to define the input parameters of a multiple-view camera system configured to generate an adjustable directional-view image for a driver of a motor vehicle. In contrast to the coordinate system shown in FIG. 3, which displays a surround-view image on a display unit, FIG. 4 relates to a display of a directional-view image, that is, an image that would be generated by a single camera or multiple cameras pointed in a direction relative to the motor vehicle, which is less than the 360° field-of-view image of a surround-view and where each of the cameras may be rotationally adjusted around the axis, *i.e.,* the an *x*-axis 404 (roll), the *y*-axis 406 (pitch), and the *z*-axis 408 (yaw), by the driver of the motor vehicle, who may also adjust the focal length of the lens of the cameras as well. In other words, the display unit and the graphical user interface together operate as a "virtual" camera.

In FIG. 4, block 402 represents a motor vehicle, and the motor vehicle and its immediate surroundings may be defined by a three-dimensional world coordinate system 400 consisting of three axes: an *x*-axis 404, a *y*-axis 406, and a *z*-axis 408. A point of origin O 410, with the coordinates of (0, 0, 0), can be arbitrarily fixed within the vehicle, for example, at its center of gravity, and the multiple-view virtual camera system may be set to point of origin O 410 initially or by default. In this respect, this coordinate system is similar to that of FIG. 3; however, in this coordinate system, the point of origin is used to determine the position of the virtual camera 414 relative to a point of origin 410.

As in FIG. 3, double-finger vertical, horizontal, and diagonal gestures may be used to control the translation of the virtual camera 414 along the *z*-axis 408, the *x*-axis 404, and the *y*-axis 406, respectively. In FIG. 4, the virtual camera 414 is shown at a position corresponding to O" 314 of FIG. 3, which would be the result of double-finger horizontal and vertical gestures. Also, the lens 414a of the virtual camera 414 is shown pointing along the *y*'-axis 506, which for the driver of the motor vehicle would be a view to his left out of the driver's side window.

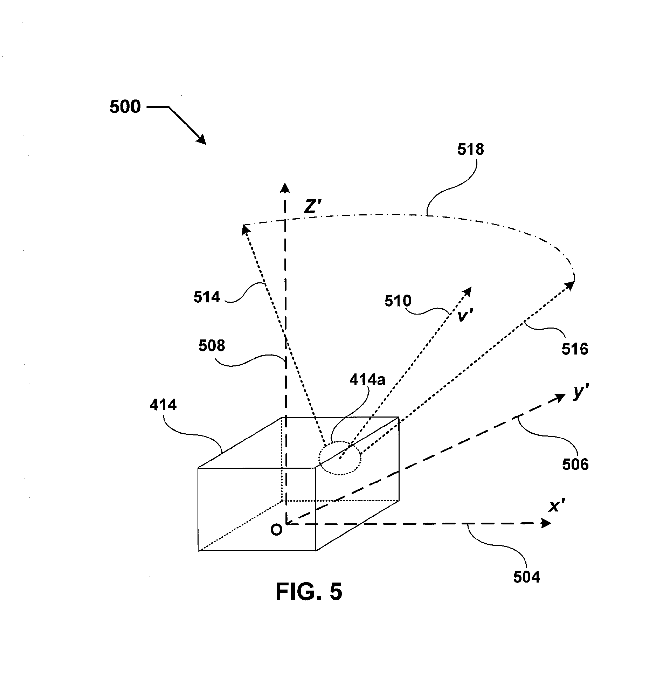

Turning to FIG. 5, a schematic diagram of an example coordinate system applied to a virtual camera 414 is shown that may be used to define image-related parameters that can be utilized to define images for display on a display unit in a motor vehicle. The rotational positioning of the virtual camera 414 may be defined by a three-dimensional world coordinate system 500 consisting of three axes: an *x*'-axis 504, a *y*'-axis 506, and a *z*'-axis 508. As in the case of adjusting the position of the virtual camera 414, when a driver of the motor vehicle wishes to adjust the virtual camera 414 rotationally, he does so by inputting the relevant image related parameters into the Parameter Setting Unit 114 through the Graphical User Interface 210, FIG. 2, where the Graphical User Interface 122 may comprise a touchscreen that is overlaid onto the Display Unit 120, and the overlay shows the three-dimensional world coordinate system 500.

As described earlier, single-finger vertical, horizontal, and spin gestures may be used to control the rotation of the virtual camera around the *y*-axis 306, the *z-*axis 308, and the *x*-axis 304, respectively. In FIG. 5, the lens 414a of the virtual camera 414 is shown pointing along the direction *v*' 510, that is, to the driver's left. This rotational positioning of the virtual camera 414 would require a 90° counterclockwise rotation around the *z*'-axis 508, which would be effected by a single-finger horizontal gesture. If the driver wished to rotate the virtual camera 414 downward so as to view, for example, a curb or shoulder of the road, this would be effected with a spin gesture that would rotate the virtual camera 414 around the *x*'-axis 504.

Once the camera is rotated to the desired position, the driver may decide to adjust the focal length of the virtual camera 414, which as described earlier, may be effected by a multi-touch gesture with the distance between the fingers when touchdown occurs exceeding a threshold Tₘ1, and zoom-in occurring when the distance increases, and zoom-out occurring when the distance decreases. In general, a longer focal length of a camera system is associated with larger magnification of distant objects and a narrower angle of view, and conversely, a shorter focal length is associated with a wider angle of view. In FIG. 5, the angle of view of the virtual camera 414 is shown schematically by the area defined by the arc 518 and the vectors 514 and 516. If the driver were to lengthen the focal length of the virtual camera 414, the angle of view would narrow but any distant objects would appear in sharper focus.

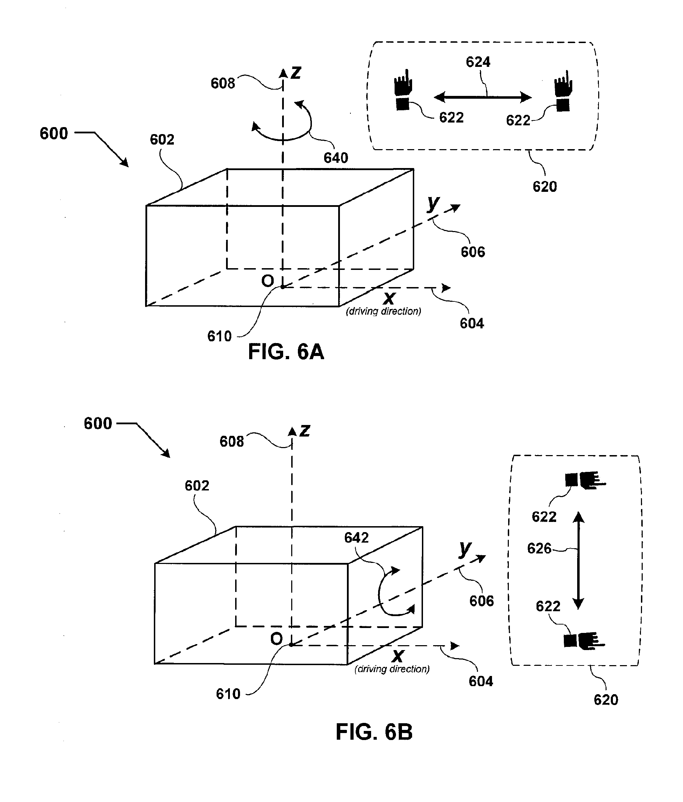

Turning to FIG. 6A, a schematic diagram of an example coordinate system applied to a multiple-view camera system 600 together with a schematic diagram of a display showing a driver's gesture for a single-touch horizontal gesture is shown. Block 602 represents a motor vehicle, and the motor vehicle and its immediate surroundings may be defined by a three dimensional world coordinate system consisting of three axes: an *x*-axis 604, a *y*-axis 606, and a *z*-axis 608. Touchscreen 620 represents a graphical user interface device that may be affixed to a display unit in a motor vehicle, and hands 622 represent a driver's hand in a single-touch configuration that generates a horizontal gesture 624 on the touchscreen 620. In this implementation, the horizontal gesture 624 results in a rotation 640 of the multiple-view camera system about the *z-*axis 608 (*i.e.*, yaw), which may be, for example, counterclockwise when the horizontal gesture 624 is right-to-left and clockwise when left-to-right.

In FIG. 6B, the touchscreen 620 again represents a graphical user interface that may be. affixed to a display unit in a motor vehicle, and hands 622 represent a driver's hand in a single-touch configuration that generates a vertical gesture 626 on the touchscreen 620. In this instance, the vertical gesture 626 results in a rotation 642 of the multiple-view camera system about the *y*-axis 606 (*i.e.,* pitch), which may be, for example, counterclockwise when the vertical gesture 624 is upward and clockwise when downward.

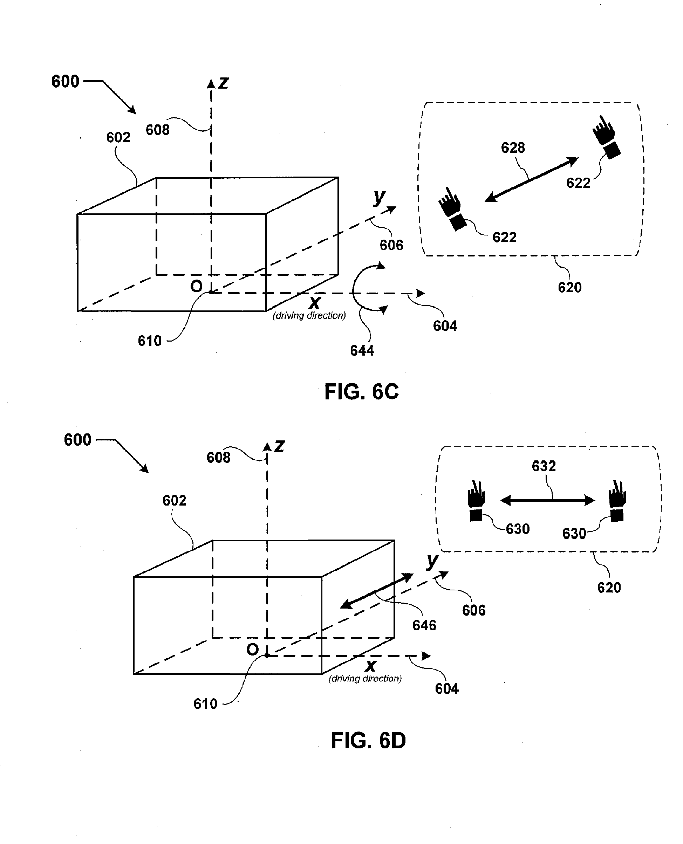

In FIG. 6C, the touchscreen 620 again represents a graphical user interface that may be affixed to a display unit in a motor vehicle, and hands 622 represent a driver's hand in a single-touch configuration that generates a spin gesture 628 on the touchscreen 620. In this instance, the spin gesture 628 results in a rotation 644 of the multiple-view camera system about the *x*-axis 604 (*i.e.,* roll), which may be, for example, counterclockwise when the spin gesture 624 is upward and clockwise when downward.

Turning to FIG. 6D, a schematic diagram of an example coordinate system applied to a multiple-view camera system 600 together with a schematic diagram of a display showing a driver's gesture for a double-touch horizontal gesture is shown. Block 602 represents a motor vehicle, and the motor vehicle and its immediate surroundings may be defined by a three dimensional world coordinate system consisting of three axes: an *x*-axis 604, a *y*-axis 606, and a *z*-axis 608. Touchscreen 620 represents a graphical user interface that may be affixed to a display unit in a motor vehicle, and hands 632 represent a driver's hand in a double-touch configuration that creates a horizontal gesture 624 on the touchscreen 620. In this implementation, the horizontal gesture 632 results in a translation 646 of the multiple-view camera along the *y*-axis 606, which may be, for example, to the driver's right when the horizontal gesture 632 is left-to-right and to the driver's left when right-to-left.

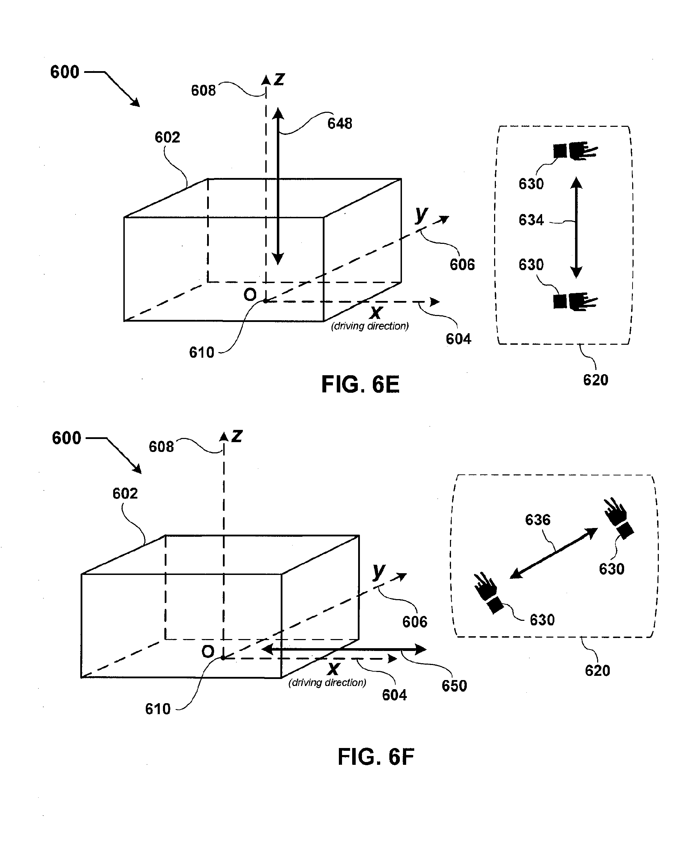

In FIG. 6E, the touchscreen 620 again represents a graphical user interface that may be affixed to a display unit in a motor vehicle, and hands 630 represent a driver's hand in a double-touch configuration that generates a vertical gesture 634 on the touchscreen 620. In this instance, the vertical gesture 634 results in a translation 648 of the multiple-view camera system along the *z*-axis 608, which may be, for example, upwards when the vertical gesture 634 is upward and downwards when the vertical gesture 634 is downward.

In FIG. 6F, the touchscreen 620 again represents a graphical user interface that may be affixed to a display unit in a motor vehicle, and hands 630 represent a driver's hand in a double-touch configuration that generates a pinch gesture 636 on the touchscreen 620. In this instance, the pinch gesture 636 results in a translation 650 of the multiple-view camera system along the *x*-axis 604, which may be, for example, forward when the pinch gesture 636 is upward and backward when the pinch gesture 636 is downward.

In another example of a mode of operation of the multiple-view camera system in a motor vehicle, when the driver inputs certain adjustments to image-related parameters into the Parameter Setting Unit 114 through the Graphical User Interface 210 by means of either single touch or multi-touch gestures, the multiple-view camera system may be configured to automatically adjust one or more of the other image-related parameters to generate the desired view without direct input from the driver. In other words, a subset of image-related parameters may be directly changed by the driver of the motor vehicle, while another subset of image related parameters may be automatically adjusted by the Parameter Setting Unit 114, in response to the changes to image-related parameters made by the driver. With less image-related parameters to be adjusted, it is easier for the driver to adjust the virtual camera system and the resulting images generated will have less distortion because the Parameter Setting Unit 114 is configured to automatically make the appropriate corresponding adjustments.

As an example, when the multiple-view camera system is operating in the surround-view mode, and the driver translates the virtual camera along either the *x-*axis 604 or the *z*-axis 608, the virtual camera is automatically rotated about the *z*-axis 608 (*i.e.*, yaw) and the *y*-axis 606 (*i.e.,* pitch), with the rotation about the *x*-axis 604 (*i.e.,* roll) remaining unchanged, so that the viewing area around the car that is displayed remains the same. Likewise, a translation along the *y*-axis 606 may correspond to a "zoom-in" or "zoom-out" of the virtual camera, whereby the Parameter Setting Unit 114 may automatically rotate the virtual camera around the *x*-axis 604 or the *z*-axis 608 so that the same viewing area around the motor vehicle is retained but with a varied camera focal length.

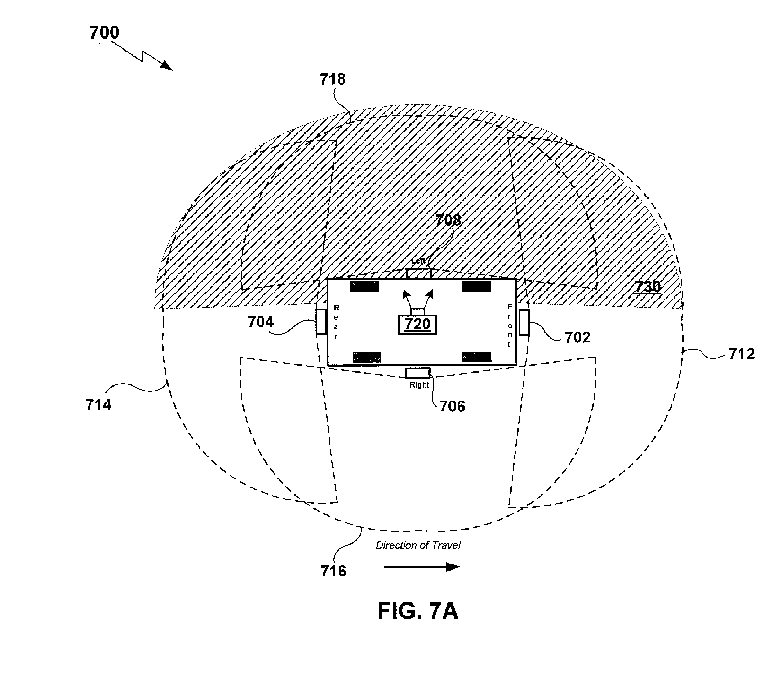

FIG. 7A shows a schematic diagram of a motor vehicle 700 that includes a multiple-view camera system in accordance with the invention. Block 700 represents a motor vehicle that contains four image source units, in this implementation, a front video camera 702, a rear video camera 704, a right-side video camera 706, and left-side video camera 708. Each of these video cameras has their own field-of-view, represented by areas 712, 714, 716, and 718, respectively. Block 720 represents a virtual camera relative to motor vehicle 700.

In FIG. 7A, the virtual camera 720 is shown focused 90° counterclockwise from the direction of travel of the motor vehicle 700, that is, directed towards the left side of the motor vehicle 700. Assuming the virtual camera of the multiple-view camera system installed in the motor vehicle is initially positioned at a point of origin based on the center of the motor vehicle 700, repositioning the virtual camera 720 would require the user to rotate the virtual camera 720 90° counterclockwise around the *z*-axis 608, FIG. 6A, which may be done with a horizontal right-to-left gesture 624.

In the configuration of FIG. 7A, the user has chosen a 180° directional-view mode of operation, with a 180° field of view of the left side of the motor vehicle, which view may be useful to the driver when performing a parallel-parking maneuver with his motor vehicle. Accordingly, in this directional-view mode, the image processing unit 112, Fig. 1, selects three images, represented by field-of-view 718 from left-side video camera 708, and portions of field-of-view 712 from front video camera 702 and field-of-view 714 from rear video camera 704, and generates an image, represented by cross-hatched area 730, comprising these three images conforming to the image-related parameters input by the user for display to the user.

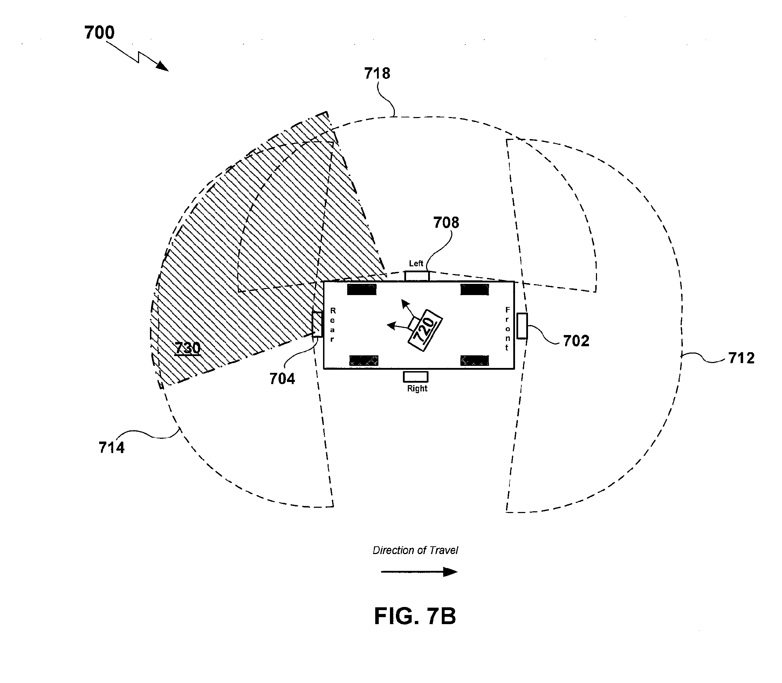

After viewing the display, the user may elect to reposition the virtual camera 720 in order to better view a particular section of his vehicle surrounding, for example, to obtain a closer view of something that appeared in a previous display. In FIG. 7B, the virtual camera 720 is shown rotated an additional 45° counterclockwise around the *z*-axis 608 from the position of the virtual camera 720 shown in FIG. 7A, and also translated to the left along the *y*-axis 606, which may be done with a horizontal right-to-left gesture 624 and a horizontal left-to-right gesture 632, respectively.

In this configuration, the user has chosen a 90° directional-view mode of operation, with a 90° field of view of the left side of the motor vehicle, which view may be useful to the driver when performing a parallel-parking maneuver with his motor vehicle. Accordingly, in this directional-view mode, the image processing unit 112, Fig. 1, selects portions of two images, represented by field-of-view 718 from left-side video camera 708 and field-of-view 714 from rear video camera 704, and generates a single image comprising these two images conforming to the image-related parameters input by the user for display to the user.

The image displayed to the user may be a three-dimensional ("3-D") or two-dimensional ("2-D") projected onto a flat or curved surface for viewing by the user. Additionally, the Image Processing Unit 112 of the multiple-view camera system 100 may be configured to adjust certain image-related parameters other than those adjustments input by the user. As an example, in FIG. 7B, the Image Processing Unit 112 may automatically change the pitch of the virtual camera 720 when it is translated along the along the *y*-axis 606, *e.g.*, rotate the virtual camera 720 downward, in order to maintain the same area of view around the motor vehicle and minimize distortion and maintain proper perspective in the displayed image.

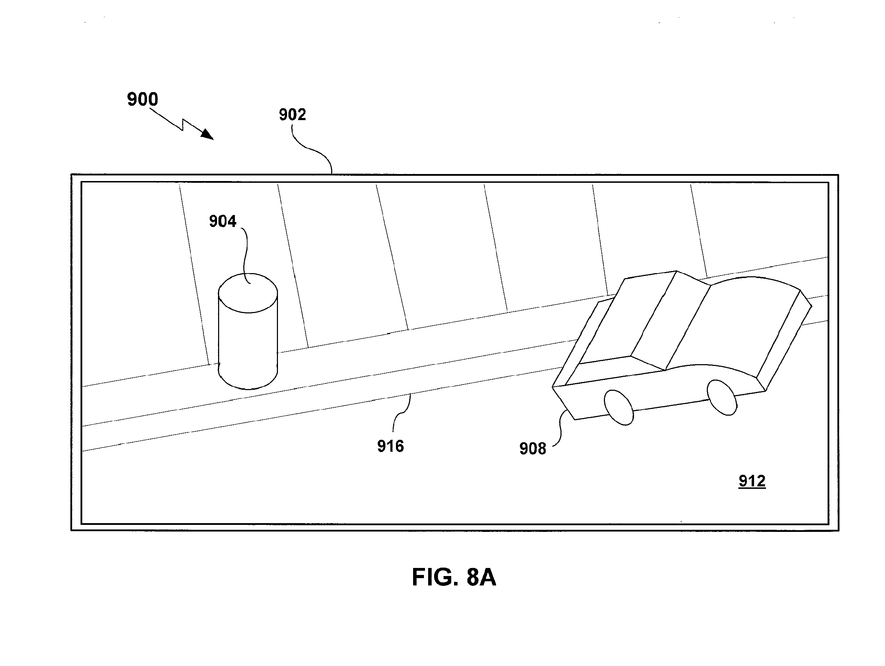

Turning to FIG. 8A, a display 902 of a multiple-view camera system is shown, where the display image on the screen of the display 902, which may be a touchscreen, is a schematic sketch of a view that may be presented to a user attempting a parallel parking maneuver parallel to curb 916. Parked vehicle 908 is shown parked next to curb 916 on roadway 912. Object 904 represents any object that may be of interest or concern to the user, such as a street sign, traffic sign, barricade or construction sign, fire hydrant, mail box, pedestrian, and the like.

Upon viewing this display, the user may choose to zoom-in and obtain a better view of object 904. In general, zoom-in and zoom-out adjustments may accomplished by a double-touch horizontal gesture 632 along the *y*-axis 606, a double-touch vertical gesture 630 along the *z*-axis 608, or a double-touch pinch gesture 636 along the *z*-axis 608, where the distance between the fingers when touchdown occurs on the touchscreen exceeds the threshold Tₘ1. If the distance between the fingers then increases, the input may be interpreted as a double-finger zoom-in gesture; otherwise, if the distance between the fingers that touch upon the touchscreen decreases, it may be interpreted as double-finger zoom-out gesture.

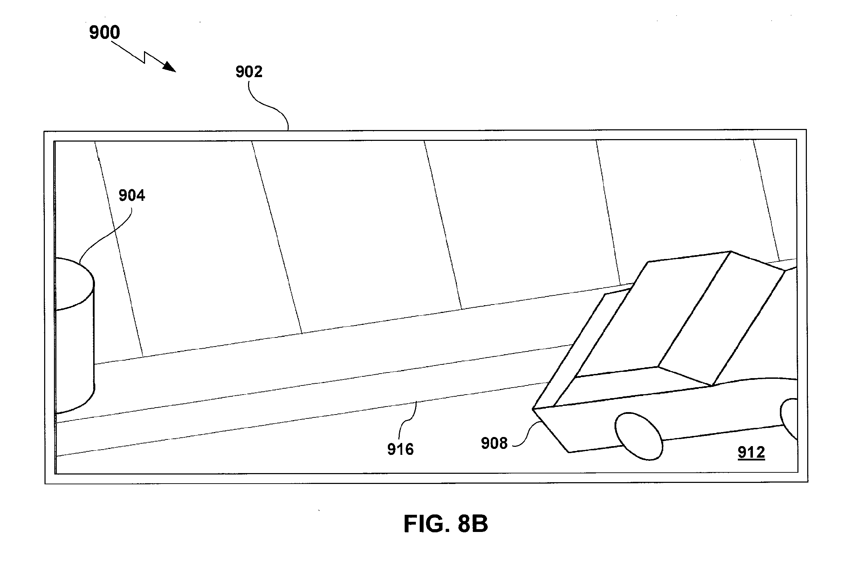

FIG. 8B shows the display image of FIG. 8A after the user has used a double-finger horizontal gesture along the *y*-axis 606, FIG. 6D, where the distance between the fingers when touchdown occurs on the touchscreen exceeded the threshold Tₘ1 and the distance between the fingers was increased. As a result, the Image Processing Unit 112 adjusted the focal length of the lens of the virtual camera 720, *i.e.,* increased its length, such that object 904 appears closer on the displayed image.

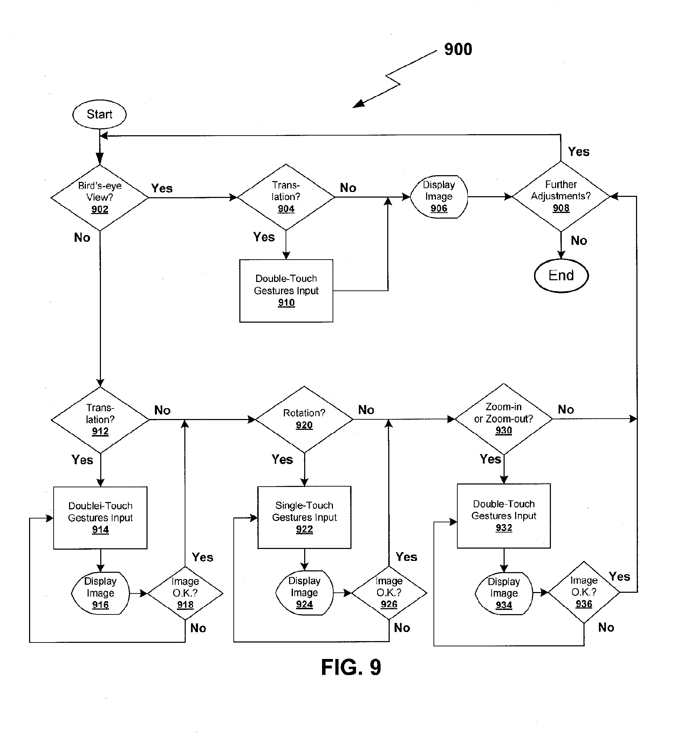

Turning to FIG. 9, a flow diagram 900 of the steps for interactively controlling a multiple-view camera system in a motor vehicle in accordance with one example of an implementation of the invention is shown. In decision step 902, the driver of the motor vehicle is asked to select either a surround-view mode or directional-view mode of interactively controlling the multiple-view camera system. Modes of operation for the multiple-view camera system may be selected by, for example, tapping on the touchscreen and toggling between surround-view and directional-view modes. There may be additional modes, in which case the modes may be sequentially selected by tapping the touchscreen. Additionally, the multiple-view camera system may be configured to allow the user to select the viewing angle while in the directional-view mode, for example, by increasing or decreasing the viewing angle responsive to single and double tapping, respectively.

If the driver selects the surround-view mode of operation, in decision step 904, the driver is given the option of re-positioning the virtual camera. If the driver elects not to do so, the process 900 proceeds to step 906, where a bird's-eye view image is displayed to the driver. In this example of an implementation, the default image for display may be a 360° bird's-eye view from a position directly above the motor vehicle, although any other type of view could be chosen. In decision step 908, the driver is asked if further adjustment of the image is required. If the answer is yes, the process 900 is repeated; otherwise, the process 700 ends.

It is appreciated by those skilled in the art that in a typical method of operation, once the multiple-view camera system is activated, the multiple-view camera system may begin to generate images on the display in the motor vehicle. Initially, the image displayed may be a surround-view generated from four video cameras mounted in the front and rear and on the left and right sides of the motor vehicle, whereby a 360° field-of-view surround-image is displayed to the driver in real time, *i.e.,* the multiple-view camera system is constantly collecting images from image source units and generating the desired image. Accordingly, the driver may at any time elect to change the mode of operation of the multiple-view camera system or adjust the position of the virtual camera, which election may be input to the multiple-view camera system by several methods. Accordingly, while the process 900 is being continuously repeated, the multiple-view camera system is constantly collecting images from image source units and generating the desired image, as adjusted by the input image-related parameters.

Returning to decision step 902, if the driver elects to re-position the virtual camera, the virtual camera is re-positioned in step 910. This may be done, for example, by translating the virtual camera along its *x*-axis, *y*-axis, and *z*-axis by double-finger pinch, horizontal, and vertical gestures, respectively. Once the desired translation parameters have been input into a parameter setting unit of the multiple-view camera system, an image generated by an image processing unit using the translation parameters is displayed in step 906.

Returning to decision step 902, if the driver selects the directional-view mode, the process 700 then proceeds to decision step 912, where the driver is asked if he wants to reposition the virtual camera, that is, adjust the position of the virtual camera by translating the virtual camera along one or more of its three axes. If the driver wants to re-position the virtual camera, this occurs in step 914, where the virtual camera may be re-positioned by, for example, inputting double-finger vertical, horizontal, and pinch gestures into the parameter setting unit.

Next in decision step 916, the driver is asked if he wants to rotate the virtual camera around one or more of its three axes. If the driver wants to rotate the virtual camera, this occurs in step 918, where the virtual camera may be rotated by, for example, inputting single-finger vertical, horizontal, or spin gestures into the parameter setting unit. Finally, in decision step 920, the driver is asked if he wants to change the focal length of the lens of the virtual camera, *i.e.,* zoom-in or zoom-out the view, which takes place in step 922.

The operations that take place in steps 914, 918, and 922 may occur in any sequence and each operation may also be repeated until the driver has achieved the displayed image he desires. After each operation, a new image is displayed to the driver in steps 916, 924, and 934, respectively, and after the display, in decision steps 918, 926, and 936, the driver has the option to accept the image as displayed or repeat the operation in decision steps 914, 922, and 932, respectively.

Once the image is satisfactory to the driver, as indicated by a YES decision in decision step 936, the process 900 proceeds to decision step 908, where if no further adjustments to the displayed image are required, the process 900 ends; otherwise, the process 900 returns to decision step 902 and the process 900 repeats.

It should be noted that the gestures referred to above are for purposes of illustrating examples of implementations of systems and methods of interactively controlling a virtual camera of a multiple-view camera system, and, for example, in other implementations of the multiple-view camera system translation along the axes of the virtual camera may be performed by use of single-finger vertical, horizontal, and spin gestures, and likewise, rotation of the virtual camera around its axes may also be performed by use of double-finger vertical, horizontal, and pinch gestures in different implementations. Additionally, each of the various vertical, horizontal, spin, and pinch gestures may also operate on axes other those set forth above.

The methods described with respect to FIG. 9 may include additional steps or modules that are commonly performed during signal processing, such as moving data within memory and generating timing signals. The steps of the depicted diagrams of FIG. 9 may also be performed with more steps or functions or in parallel.

It will be understood, and is appreciated by persons skilled in the art, that one or more processes, sub-processes, or process steps or modules described in connection with FIG. 9 may be performed by hardware and/or software. If the process is performed by software, the software may reside in software memory (not shown) in a suitable electronic processing component or system such as one or more of the functional components or modules schematically depicted or identified in FIGs. 1-9. The software in software memory may include an ordered listing of executable instructions for implementing logical functions (that is, 'logic' that may be implemented either in digital form such as digital circuitry or source code), and may selectively be embodied in any computer-readable medium for use by or in connection with an instruction execution system, apparatus, or device, such as a computer-based system, processor-containing system, or other system that may selectively fetch the instructions from the instruction execution system, apparatus, or device and execute the instructions. In the context of this disclosure, a "computer-readable medium" is any tangible means that may contain, store or communicate the program for use by or in connection with the instruction execution system, apparatus, or device. The computer readable medium may selectively be, for example, but is not limited to, an electronic, magnetic, optical, electromagnetic, infrared, or semiconductor system, apparatus or electronic, magnetic, optical, electromagnetic, infrared, or semiconductor system, apparatus or device. More specific examples, but nonetheless a non-exhaustive list, of computer-readable media would include the following: a portable computer diskette (magnetic), random-access memory ("RAM") (electronic), a read-only memory ("ROM") (electronic), an erasable programmable read-only memory ("EPROM" or Flash memory) (electronic) and a portable compact disc read-only memory ("CDROM") (optical). Note that the computer-readable medium may even be paper or another suitable medium upon which the program is printed and captured from and then compiled, interpreted or otherwise processed in a suitable manner if necessary, and then stored in a computer memory.

The foregoing description of implementations has been presented for purposes of illustration and description. It is not exhaustive and does not limit the claimed inventions to the precise form disclosed. Modifications and variations are possible in light of the above description or may be acquired from practicing examples of the invention. The claims and their equivalents define the scope of the invention.

## Claims

1. A multiple-view camera system for a motor vehicle, the multiple-view camera system comprising:
one or more image source units;
an image processing unit in signal communication with each of the one or more image source units, configured to receive multiple images from each of the one or more image source units;
a parameter setting unit in signal communication with the image processing unit, configured to transmit to the image processing unit image-related parameters input by a user of the multiple-view camera system, where the image-related parameters are utilized by the image processing unit to generate images for display to the user; and
a display in signal communication with the image processing unit, configured to display to the user the display images generated by the image processing unit.

2. The multiple-view camera system of claim 1, where the one or more image source units include two video cameras, with one located at the front of the motor vehicle and the other located at the rear of the motor vehicle.

3. The multiple-view camera system of claim 2, where the one or more image source units further includes two additional video cameras, with one located at a driver's side of the motor vehicle and the other located at a passenger's side of the motor vehicle.

4. The multiple-view camera system of claim 2, where the image processing unit is configured to generate a three-dimensional ("3D") image from images collected by the video cameras.

5. The multiple-view camera system of claim 2, where the image-related parameters are input into the parameter setting unit by the user through a graphical user interface in signal communication with the image processing unit.

6. The multiple-view camera system of any of claims 1-6, where the image-related parameters are used to position a virtual camera of the multiple-view camera system relative to the motor vehicle, where a position of the virtual camera is defined by a three-dimensional world coordinate system comprising three axes.

7. The multiple-view camera system of claim 6, where the image-related parameters used to position the virtual camera are generated from single-touch and multi-touch gestures input to the parameter setting unit by the user using a touchscreen.

8. The multiple-view camera system of claim 7, where the virtual camera is translated along each of its three axes by double-touch gestures input by the user or is rotated about each of its three axes by single-touch gestures input by the user.

9. The multiple-view camera system of claim 7, where a focal length of the virtual camera is changed by double-touch zoom-in and zoom-out gestures input by the user.

10. A method of interactively controlling a multiple-view camera system in a motor vehicle, the method comprising:
collecting one or more images from a plurality of image source units in the motor vehicle;
inputting image-related parameters into the multiple-view camera system through a graphical user interface by a user of the motor vehicle;
generating an image for display to the user responsive to the image-related parameters; and
displaying the image for display to the user on a display in the motor vehicle.

11. The method of claim 10, where the image source units are video cameras and the step of collecting includes collecting one or more images from the video cameras.

12. The method of claim 11, where the step of inputting image-related parameters includes interpreting gestures made on a touchscreen by the user.

13. The method of claim 12, where the step of generating an image for display includes:
positioning a virtual camera of the multiple-view camera system relative to the motor vehicle responsive to the image-related parameters;
selecting all or portions of the images collected from the image source units based on the position of the virtual camera; and
generating a three-dimensional ("3D") image for display to the user from the selected images.

14. The method of claim 13, where the virtual camera is defined relative to the motor vehicle by a three-dimensional world coordinate system comprising three axes.

15. The method of claim 14, where the step of positioning the virtual camera includes translating the virtual camera along each of its three axes responsive to double-touch gestures input by the user or rotating the virtual camera around each of its three axes by single-touch gestures input by the user.
